# FASCICULE DE BREVET EUROPEEN

(11) **EP 3 931 435 B1**
(45) Date de publication et mention de la délivrance du brevet: **06.05.2026**
(21) Numéro de dépôt: 20710263.3
(22) Date de dépôt: 20.02.2020
(51) Int. Cl.: F02K 1/82, F02C 7/045, F02C 7/24, B32B 3/12

(54) **SYSTÈME ALVÉOLAIRE DILATABLE POUR PANNEAU SANDWICH**
ERWEITERBARES ZELLULARES SYSTEM FÜR EINE SANDWICHPLATTE
EXPANDABLE CELLULAR SYSTEM FOR A SANDWICH PANEL

(30) Priorité: 26.02.2019 FR 1901967
(43) Date de publication de la demande: 05.01.2022
(73) Titulaire: Safran Nacelles, 76700 Gonfreville-l'Orcher (FR); Safran Ceramics, 33185 Le Haillan (FR)
(72) Inventeur: DESJOYEAUX, Bertrand, 77550 MOISSY CRAMAYEL (FR); SILVA DE VASCONCELLOS, Davi, 77550 MOISSY CRAMAYEL (FR); TAILLARD, François, 77550 MOISSY CRAMAYEL (FR); BOUILLON, Florent, 77550 MOISSY CRAMAYEL (FR)
(74) Mandataire: Germain Maureau
(86) Numéro de dépôt international: PCT/FR2020/050324
(87) Numéro de publication internationale: WO 2020/174162

(56) Documents cités:
- EP-A2- 0 465 719
- FR-A3- 2 849 803
- US-A- 4 161 231
- US-A- 4 323 614
- US-A1- 2014 154 460
- US-B1- 6 242 069

## Description

La présente invention se rapporte à un système alvéolaire pour panneau sandwich, et plus particulièrement à un système alvéolaire pour panneau sandwich soumis à des gradients thermiques ou des changements de température, tel qu'un panneau sandwich destiné à équiper une tuyère d'éjection d'une nacelle de turboréacteur d'aéronef.

Un panneau sandwich comprend de manière connue deux peaux sensiblement parallèles, reliées par un système intermédiaire comprenant des cloisons transversales aux peaux. Ces cloisons transversales forment, avec les peaux qu'elles relient, un système alvéolaire.

Dans un mode de réalisation, les peaux du panneau sandwich sont pleines. On parle alors de panneau structural.

Un tel panneau structural a une fonction de rigidification.

Dans un autre mode de réalisation, une peau du panneau sandwich est perforée, c'est-à-dire perméable acoustiquement, et l'autre peau est un réflecteur acoustique perforé ou non. On parle alors de panneau acoustique.

Un tel panneau acoustique permet une atténuation acoustique.

L'invention sera plus particulièrement décrite au regard d'un panneau sandwich, structural ou acoustique, destiné à équiper une tuyère d'éjection d'une nacelle de turboréacteur d'aéronef, sans pour autant y être limité.

Une tuyère d'éjection est disposée de manière connue à l'arrière d'un turboréacteur d'aéronef, plus précisément en aval de la turbine du turboréacteur de manière concentrique à une virole, elle-même fixée sur le bord aval de la chambre de combustion du turboréacteur.

Les termes « amont » et « aval » s'entendent par rapport au sens d'écoulement des gaz d'échappement du turboréacteur.

Une tuyère comporte généralement au moins un panneau sandwich périphérique, présentant une peau au contact du flux d'air chaud en sortie du turboréacteur, dite peau externe, et une peau opposée, dite peau interne.

Un tel panneau sandwich disposé en périphérie d'une tuyère d'éjection est soumis à des températures élevées du côté de la peau externe au contact du flux d'air chaud. Il existe un gradient thermique entre la peau interne et la peau externe du panneau sandwich. Ce gradient de température peut atteindre 200 voire 300°C entre les deux peaux.

Ce gradient thermique entre les peaux engendre des contraintes mécaniques au niveau des matériaux formant le panneau sandwich. Ces contraintes peuvent également être dues aux coefficients de dilatation thermiques variables des matériaux constitutifs du panneau. De telles contraintes mécaniques peuvent engendrer la rupture du panneau sandwich si elles sont supérieures à la tenue des matériaux.

Il est nécessaire de réduire ces contraintes mécaniques, de façon à pouvoir utiliser des matériaux dont la tenue est plus faible et qui ont comme avantage d'être plus légers, tels que les céramiques.

Une solution connue consiste à séparer chaque cloison du système intermédiaire en deux parties, dans un plan parallèle aux peaux interne et externe, de sorte que chaque cloison présente une première partie raccordée à la peau interne et une seconde partie raccordée à la peau externe, les première et seconde parties étant reliées entre elles par un système de bielles. Ce système de bielles permet de réduire les contraintes mécaniques mais il a pour inconvénient d'augmenter la masse du panneau sandwich. En outre, chaque cloison étant séparée en deux parties, dans un plan parallèle aux peaux interne et externe, elles ne forment pas, avec les peaux interne et externe, un système alvéolaire. Un tel panneau ne peut donc pas être utilisé en tant que panneau acoustique.

Une autre solution connue pour des panneaux acoustiques, consiste à réaliser des cellules de structure intermédiaire ouvertes au niveau de la peau externe, de sorte que lesdites cellules soient partiellement fermées. La peau externe est donc formée de plusieurs éléments de peau. L'inconvénient de cette solution est que ces ouvertures engendrent des fuites d'air importantes, ce qui diminue le rendement d'atténuation acoustique.

Le document US 4 323 614 décrit une structure alvéolaire en céramique, comportant des cellules alvéolaires possédant des parois incurvées leur permettant de s'adapter aux déformations dues aux contraintes thermiques dans des plans normaux à l'axe longitudinal de la cellule.

Le document US 4 161 231 décrit une structure alvéolaire métallique rigide traitant d'une différence de dilatation thermique au sein de la structure.

Le but de la présente invention est de remédier à ces inconvénients tout en réduisant les contraintes mécaniques engendrées par des gradients thermiques.

A cet effet, l'invention a pour objet un panneau sandwich pour nacelle de turboréacteur d'aéronef, comportant :
- une peau dite externe, destinée à être au contact d'un flux d'air ;
- une peau dite interne, opposée à la peau externe,
- un système intermédiaire comprenant des cloisons reliant les peaux interne et externe, de façon à former des alvéoles,
caractérisé en ce que la peau interne d'au moins une alvéole présente au moins une ondulation destinée à permettre aux matériaux constitutifs du panneau sandwich de se déformer en cas de variation thermique.

Une telle ondulation permet aux matériaux constitutifs des panneaux sandwich de se déformer en cas de variation thermique, et évite ainsi les contraintes mécaniques.

Par ondulation, on entend une surface non plane, l'ondulation pouvant être une ou des courbures et/ou un ou des cisaillements.

Par cisaillement on entend une ondulation angulaire, présentant des décrochés, autrement appelée ligne brisée. Ainsi, la peau interne ondulée peut se présenter sous forme d'une surface à facettes reliées par des arrêtes.

De cette façon, les matériaux constitutifs du panneaux sandwich peuvent se déformer en cas de variation thermique et les contraintes mécaniques sont évitées.

Selon d'autres caractéristiques de l'invention, le panneau sandwich de l'invention comporte l'une ou plusieurs des caractéristiques optionnelles suivantes considérées seules ou selon toutes les combinaisons possibles.

Selon une caractéristique, la peau interne présente au moins une ondulation dans au moins deux directions.

Selon une caractéristique, la peau interne présente au moins une ondulation transversale au flux d'air chaud.

Selon une caractéristique, la peau interne de ladite au moins une alvéole présente une ligne brisée et/ou courbe au niveau de son intersection avec au moins un plan transversal à la peau externe.

Selon une caractéristique, la peau interne de ladite au moins une alvéole présente une ligne brisée et/ou courbe au niveau de son intersection avec au moins deux plans transversaux à la peau externe, lesdits plans étant sécants et de préférence perpendiculaires.

Selon une caractéristique, la peau interne de ladite au moins une alvéole présente une ligne brisée et/ou courbe au niveau de son intersection avec tout plan transversal à la peau externe.

Selon une caractéristique, au moins une cloison de ladite au moins une alvéole présente au moins une zone ondulée.

Par zone ondulé on entend une surface non plane présentant au moins une ondulation, l'ondulation pouvant être une courbure et/ou un cisaillement.

Par cisaillement on entend une ondulation angulaire, présentant au moins un décroché, autrement appelée ligne brisée. Ainsi, la peau interne ondulée peut se présenter sous forme d'une surface à facettes reliées par des arrêtes.

Selon une caractéristique, l'ensemble des cloisons présente au moins une zone ondulée.

La zone ondulée de la cloison est disposée de préférence au contact de la peau interne.

La zone ondulée de la cloison est disposée sur au moins une partie de la hauteur de la cloison.

La zone ondulée de la cloison présente une ondulation selon une direction verticale ou horizontale, et de préférence selon un direction verticale et horizontale.

Selon une caractéristique, la peau externe est perforée et la peau interne est un réflecteur acoustique, de sorte que le panneau sandwich ait une fonction d'atténuation acoustique.

Selon cette caractéristique, le panneau sandwich est un panneau acoustique.

Selon cette caractéristique, la peau interne est soit pleine soit perforée.

Selon une caractéristique, les matériaux constitutifs du panneau sandwich sont des métaux et/ou des matériaux composites tels que des CMO ou des CMC.

D'autres caractéristiques et avantages de la présente invention apparaitront à la lecture de la description qui va suivre et à l'examen des figures annexées dans lesquelles :
[Fig. 1] est une vue schématique d'une nacelle de turboréacteur d'aéronef comprenant un panneau sandwich selon l'invention,
[Fig. 2] est une vue schématique partielle d'un panneau sandwich selon un premier mode de réalisation de l'invention,
[Fig. 3] est une vue schématique en perspective d'une alvéole d'un panneau sandwich selon un deuxième mode de réalisation de l'invention,
[Fig. 4] est une vue schématique en perspective d'une alvéole d'un panneau sandwich selon un troisième mode de réalisation de l'invention,
[Fig. 5] est une vue schématique en perspective d'une alvéole d'un panneau sandwich selon un quatrième mode de réalisation de l'invention,
[Fig. 6] est une vue schématique en perspective d'une alvéole d'un panneau sandwich selon un cinquième mode de réalisation de l'invention ;
[Fig. 7A] est une vue schématique en coupe d'une alvéole d'un panneau sandwich selon un sixième mode de réalisation de l'invention, selon un premier plan parallèle à la peau externe de ladite alvéole ;
[Fig. 7B] est une vue schématique en coupe de l'alvéole de la figure 7A, selon un deuxième plan parallèle à la peau externe de ladite alvéole ;
[Fig. 8] est une vue schématique en coupe d'alvéoles d'un panneau sandwich selon un septième mode de réalisation de l'invention.

Dans la description qui va suivre et dans les revendications, des composants identiques, similaires ou analogues seront désignés par les mêmes chiffres de référence et on emploiera les termes « amont », « aval », « interne », « externe », « horizontal », « vertical », etc. à titre non limitatif et en référence aux dessins afin de faciliter la description.

Les figures décrites ci-après sont des exemples de réalisation non limitatifs.

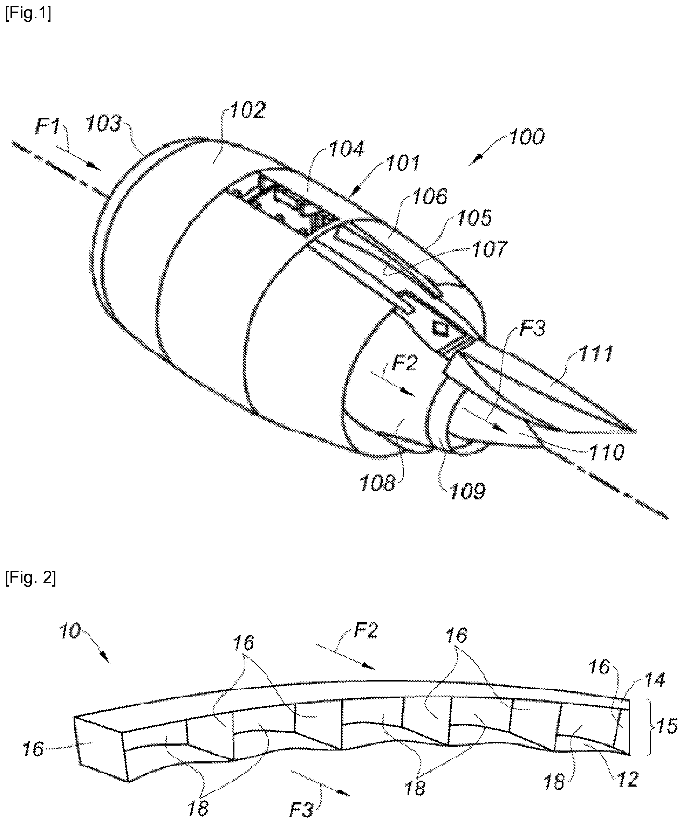

La figure 1 illustre une nacelle 100 suspendue à un pylône 111 destiné à être fixé à une aile (non représentée) d'un aéronef (non représenté). La nacelle 100 comprend une structure externe 101 comprenant une section amont 102 dotée d'une lèvre 103 formant une entrée d'air F1, une section médiane 104 recevant une soufflante (non représentée) d'un turboréacteur (non représenté), et une section aval 105.

La structure externe 101 définit une surface aérodynamique externe 106 et une surface aérodynamique interne 107, reliées en amont par une paroi de bord d'attaque formant lèvre 103 d'entrée d'air.

La nacelle 100 comprend en outre une structure interne fixe 108 concentrique de la section aval 105 de la structure externe 101, ladite section interne fixe 108 entourant une partie amont du turboréacteur (non représenté).

La structure interne fixe 108 et la structure externe 101 délimitent une veine annulaire définissant un passage pour un flux d'air froid F2 dit secondaire.

La nacelle 100 comprend également une tuyère d'éjection 109, appelée également buse d'éjection, et un cône d'éjection 110 de gaz. Le cône d'éjection 110 et la tuyère d'éjection 109 définissent un passage pour un flux d'air chaud F3 sortant du turboréacteur.

La nacelle 100 comprend des panneaux sandwich 10 (figure 2) permettant d'assurer une fonction de rigidification et/ou d'atténuation acoustique.

Ces panneaux sandwich 10 sont soumis à des gradients thermiques, notamment au niveau de la section aval 105 de la structure externe 101, de la section interne fixe 108, et de la tuyère d'éjection 109, en raison de leur proximité avec le turboréacteur, et de leur contact avec des flux d'air froid F1 et chaud F2.

La figure 2 représente un panneau sandwich 10 pour nacelle 100 (figure 1) selon un premier mode de réalisation de l'invention.

Le panneau sandwich 10 comprend une peau interne 12 et une peau externe 14 reliées par un système intermédiaire 15 comprenant des cloisons 16 disposées dans des plans perpendiculaires à la peau externe 14.

Les peaux interne 12 et externe 14 sont sensiblement parallèles.

Dans cet exemple de réalisation, le panneau sandwich 10 est disposé sur la tuyère d'éjection 109. Ainsi, la peau externe 14 est au contact du flux d'air froid F2 sortant de la veine annulaire, et la peau interne 12 est au contact du flux d'air chaud F3 sortant du turboréacteur.

La peau interne 12 est opposée à la peau externe 14.

Les cloisons 16 forment, avec les peaux interne 12 et externe 14, des alvéoles 18 de forme sensiblement parallélépipédique.

Sur la figure 2, seules deux cloisons 16 de chaque alvéole 18 sont représentées. D'autres cloisons transversales (non représentées) aux peaux interne et externe permettent de fermer ces alvéoles 18.

La peau externe 14 de chaque alvéole 18 est sensiblement plane.

La peau interne 12 de chaque alvéole 18 présente une ondulation comprenant au moins une courbure transversale au flux d'air chaud F3.

Dans une variante non représentée, le panneau sandwich 10 est disposé sur la section aval 105 de la structure externe 101. Ainsi, la peau externe 14 est au contact d'un flux d'air externe (non représenté), et la peau interne 12 est au contact du flux d'air froid F2 sortant de la veine annulaire.

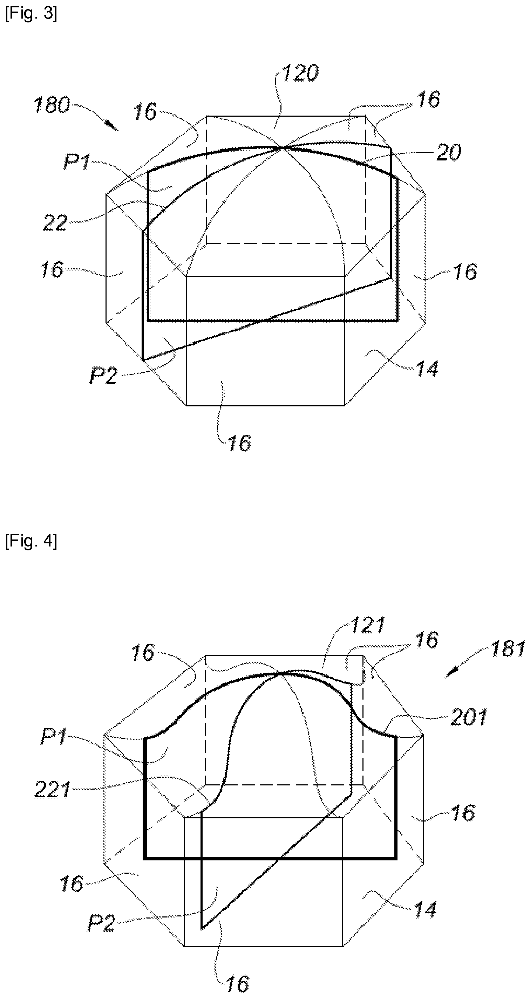

La figure 3 illustre une alvéole 180 d'un panneau sandwich selon un deuxième mode de réalisation de l'invention. L'alvéole 180 est formée d'une peau externe 14 et d'une peau interne 120, les peaux interne et externe étant séparées par six cloisons 16. L'alvéole 180 a une forme hexagonale.

La peau externe 14 de chaque alvéole est sensiblement plane.

La peau interne 120 de chaque alvéole 180 présente une ondulation comprenant au moins une courbure destinée à être disposée transversalement au flux d'air chaud F3 ou froid F2, selon la disposition du panneau sandwich 10 constitué d'alvéoles 180.

La peau interne 120 présente une première ligne courbe 20 au niveau de son intersection avec un premier plan P1 transversal à la peau externe 14.

Le premier plan P1 est avantageusement destiné à être transversal au flux d'air chaud F3 ou froid F2.

La peau interne 120 présente en outre une deuxième ligne courbe 22 au niveau de son intersection avec un deuxième plan P2 transversal à la peau externe 14, le deuxième plan P2 étant sécant au premier plan P1.

Les première et deuxième lignes courbes 20, 22 présentent un seul sens de courbure, les courbures pouvant être différentes entre elles.

Dans une variante non représentée, les premier et deuxième plans P1, P2 sont perpendiculaires.

Plus particulièrement, la peau interne 120 présente une ligne courbe 20, 22 au niveau de son intersection avec tout plan transversal à la peau externe 14.

La figure 4 illustre une alvéole 181 d'un panneau sandwich selon un troisième mode de réalisation de l'invention. L'alvéole 181 est formée d'une peau externe 14 et d'une peau interne 121, les peaux interne et externe étant séparées par six cloisons 16. L'alvéole 181 a une forme hexagonale.

La peau externe 14 de chaque alvéole est sensiblement plane.

La peau interne 121 de chaque alvéole 181 présente une ondulation comprenant au moins une courbure destinée à être disposée transversalement au flux d'air chaud F3 ou froid F2, selon la disposition du panneau sandwich 10 constitué d'alvéoles 181.

La peau interne 121 présente une première ligne courbe 201 au niveau de son intersection avec un premier plan P1 transversal à la peau externe 14.

Le premier plan P1 est avantageusement destiné à être transversal au flux d'air chaud F3 ou froid F2.

La peau interne 121 présente en outre une deuxième ligne courbe 221 au niveau de son intersection avec un deuxième plan P2 transversal à la peau externe 14, le deuxième plan P2 étant sécant au premier plan P1.

Les première et deuxième lignes courbes 201, 221 présentent chacune plusieurs courbures.

Dans une variante non représentée, les premier et deuxième plans P1, P2 sont perpendiculaires.

Plus particulièrement, la peau interne 121 présente une ligne courbe 201, 221 au niveau de son intersection avec tout plan transversal à la peau externe 14.

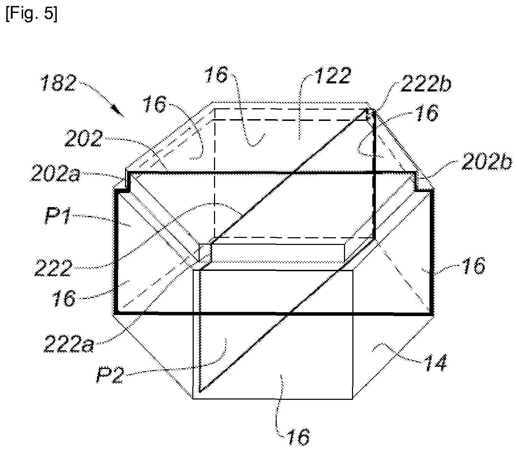

La figure 5 illustre une alvéole 182 d'un panneau sandwich selon un quatrième mode de réalisation de l'invention. L'alvéole 182 est formée d'une peau externe 14 et d'une peau interne 122, les peaux interne et externe étant séparées par six cloisons 16. L'alvéole 182 a une forme hexagonale.

La peau externe 14 de chaque alvéole est sensiblement plane.

La peau interne 122 de chaque alvéole 182 présente une ondulation comprenant au moins un cisaillement destiné à être disposée transversalement au flux d'air chaud F3 ou froid F2, selon la disposition du panneau sandwich 10 constitué d'alvéoles 182.

La peau interne 122 présente une première ligne brisée 202 au niveau de son intersection avec un premier plan P1 transversal à la peau externe 14.

Le premier plan P1 est avantageusement destiné à être transversal au flux d'air chaud F3 ou froid F2.

La peau interne 122 présente en outre une deuxième ligne brisée 222 au niveau de son intersection avec un deuxième plan P2 transversal à la peau externe 14, le deuxième plan P2 étant sécant au premier plan P1.

Dans ce mode de réalisation, l'ondulation est un cisaillement.

Les première et deuxième lignes brisées 202, 222 présentent plusieurs décrochés, respectivement 202a, 202b, et 222a, 222b.

Dans une variante non représentée, les premier et deuxième plans P1, P2 sont perpendiculaires.

Plus particulièrement, la peau interne 122 présente une ligne brisée 202, 222 au niveau de son intersection avec tout plan transversal à la peau externe 14.

Dans une variante non représentée, la peau interne d'une alvéole comporte une ondulation comportant au moins une courbure et au moins un cisaillement.

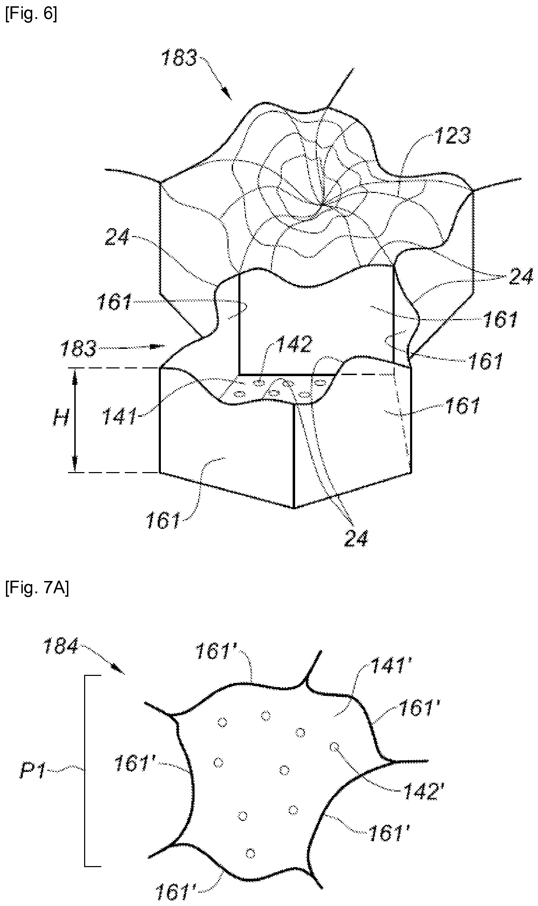

La figure 6 illustre deux alvéoles 183 d'un panneau sandwich selon un cinquième mode de réalisation de l'invention. Les alvéoles 183 sont formées d'une peau externe 141 perforée, présentant des perforations 142, et d'une peau interne 123 sous forme de réflecteur acoustique, les peaux interne et externe étant séparées par cinq cloisons 161. L'alvéole 183 a une forme pentagonale.

Un panneau sandwich comportant de telles alvéoles 183 est un panneau acoustique.

La peau externe 141 de chaque alvéole est sensiblement plane.

La peau interne 123 de chaque alvéole 183 présente une ondulation comprenant au moins une courbure destinée à être disposée transversalement au flux d'air chaud F3 ou froid F2, selon la disposition du panneau sandwich 10 constitué d'alvéoles 183, sensiblement identique aux courbures décrites au regard de la figure 4.

Chaque cloison 161 présente au moins une zone ondulée 24 disposée sur au moins une partie de la hauteur H de la cloison 161. Dans l'exemple de la figure 6, les cloisons 161 ont une ligne de contact rectiligne le long du contact avec la peau externe 141, et une ligne de contact ondulée le long du contact avec la peau interne 123.

La zone ondulée 24 est une surface non plane pouvant présenter plusieurs courbures selon des directions horizontale et verticale.

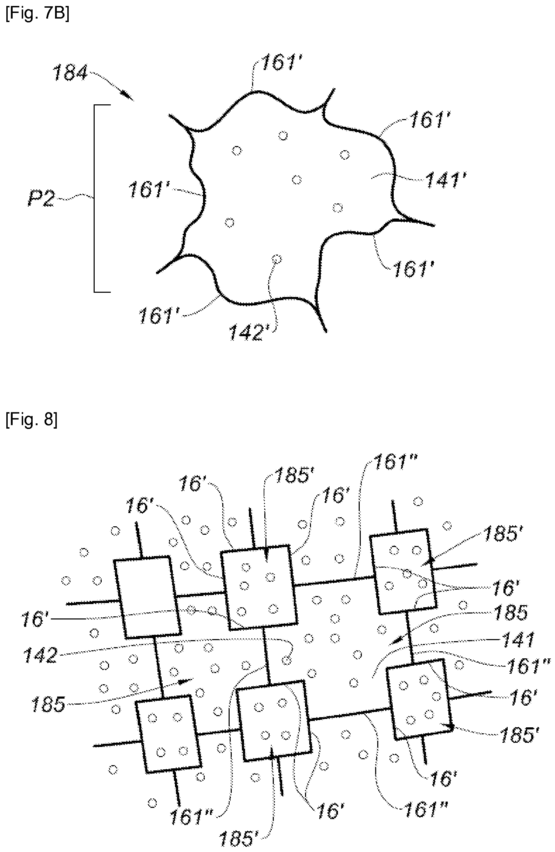

Les figures 7A et 7B illustrent deux coupes d'une alvéole 184 selon un sixième mode de réalisation, selon des plans, respectivement P1 et P2, parallèles à la peau externe 141' présentant des perforations 142'. L'alvéole 184 présente des cloisons 161' ondulées selon une direction horizontale, c'est-à-dire selon une direction parallèle à la peau externe 141' ou au plan de coupe P1, P2.

Les ondulations des cloisons 161' sont différentes dans le premier plan P1 et dans le deuxième plan P2.

La figure 8 illustre une variante dans laquelle des alvéoles 185 présentent des cloisons 161" présentant une zone ondulée sous forme de cisaillement.

Dans cette variante, des alvéoles adjacentes 185' présentent des cloisons droites 16' qui forme une intersection avec les cloisons cisaillées 161". De ce fait, lorsque les dimensions des cloisons droites 16' augmentent ou réduisent sous l'effet des différences de températures, les cloisons cisaillées 161' se déforment aisément en flexion évitant des contraintes mécaniques élevées.

Dans cette variante, la peau interne (non visible) présente également des ondulations pour se déformer en même temps que les cloisons cisaillées 161'. La peau interne ondulée est représentée sur les figures 3 à 6.

Dans des variantes non représentées, les alvéoles comportent entre deux et huit cloisons, par exemple quatre cloisons.

En outre, dans des variantes non représentées, un panneau sandwich selon l'invention comporte des alvéoles selon différentes variantes.

Les matériaux constitutifs des panneaux sandwich selon l'invention sont avantageusement des métaux.

En variante, les matériaux constitutifs des panneaux sandwich selon l'invention sont des matériaux composites tels que des CMO ou des CMC.

Dans d'autres variantes, les peaux internes et externes des panneaux sandwich selon l'invention sont en matériau composite tel qu'en CMC, et les cloisons sont métalliques (par exemple en Inconel ou Titane).

## Revendications

1. Panneau sandwich (10) pour nacelle (100) de turboréacteur d'aéronef, comportant :
- une peau dite externe (14, 141), destinée à être au contact d'un flux d'air,
- une peau dite interne (12, 120, 121, 122, 123), opposée à la peau externe (14, 141),
- un système intermédiaire (15) comprenant des cloisons (16, 161) reliant les peaux interne (12, 120, 121, 122, 123) et externe (14, 141), de façon à former des alvéoles (18, 180, 181, 182, 183),
**caractérisé en ce que** la peau interne (12, 120, 121, 122, 123) d'au moins une alvéole (18, 180, 181, 182, 183) présente au moins une ondulation destinée à permettre aux matériaux constitutifs du panneau sandwich de se déformer en cas de variation thermique, et au moins une cloison (161) de ladite au moins une alvéole (18, 180, 181, 182, 183) présente au moins une zone ondulée (24).

2. Panneau sandwich selon l'une quelconque des revendications précédentes, dans lequel la peau interne (12, 120, 121, 122, 123) de ladite au moins une alvéole (18, 180, 182, 183) présente une ligne brisée (202, 222) et/ou courbe (20, 201, 22, 221) au niveau de son intersection avec au moins un plan (P1, P2) transversal à la peau externe (14, 141).

3. Panneau sandwich selon l'une quelconque des revendications précédentes, dans lequel la peau interne (12, 120, 121, 122, 123) de ladite au moins une alvéole (18, 180, 181, 182, 183) présente une ligne brisée (202, 222) et/ou courbe (20, 201, 22, 221) au niveau de son intersection avec au moins deux plans (P1, P2) transversaux à la peau externe, lesdits plans (P1, P2) étant sécants et de préférence perpendiculaires.

4. Panneau sandwich selon l'une quelconque des revendications précédentes, dans lequel la peau interne (12, 120, 121, 122, 123) de ladite au moins une alvéole (18, 180, 181, 182, 183) présente une ligne brisée (202, 222) et/ou courbe (20, 201, 22, 221) au niveau de son intersection avec tout plan transversal à la peau externe.

5. Panneau sandwich selon l'une quelconque des revendications précédentes, dans lequel l'ensemble des cloisons (161) de ladite au moins une alvéole présente au moins une zone ondulée (24).

6. Panneau sandwich selon la revendication précédente, dans lequel la zone ondulée (24) est disposée au contact de la peau interne (12, 120, 121, 122, 123).

7. Panneau sandwich selon l'une quelconque des revendications 5 à 6, dans lequel la zone ondulée (24) présente une ondulation selon une direction verticale et/ou horizontale.

8. Panneau sandwich selon l'une quelconque des revendications précédentes, dans lequel la peau externe (141) est perforée et la peau interne (12, 120, 121, 122, 123) est un réflecteur acoustique, de sorte que le panneau sandwich ait une fonction d'atténuation acoustique.

9. Panneau sandwich selon l'une quelconque des revendications précédentes, dans lequel les matériaux constitutifs du panneau sandwich (10) sont des métaux et/ou des matériaux composites tels que des CMO ou des CMC.

10. Tuyère d'éjection (109) d'une nacelle (100) de turboréacteur d'aéronef comportant un panneau sandwich (10) selon l'une quelconque des revendications précédentes.

## Patentansprüche

1. Sandwich-Paneel (10) für eine Gondel (100) eines Flugzeug-Turbinenluftstrahltriebwerks, umfassend:
- eine äußere Haut (14, 141), die dazu bestimmt ist, mit einem Luftstrom in Kontakt zu sein,
- eine innere Haut (12, 120, 121, 122, 123), die der äußeren Haut (14, 141) gegenüberliegt,
- ein Zwischensystem (15), das Trennwände (16, 161) umfasst, die die innere (12, 120, 121, 122, 123) und die äußere (14, 141) Haut verbinden, um Waben (18, 180, 181, 182, 183) zu bilden,
**dadurch gekennzeichnet, dass** die innere Haut (12, 120, 121, 122, 123) mindestens einer Wabe (18, 180, 181, 182, 183) mindestens eine Welle aufweist, die dazu bestimmt ist, es den Materialien, aus denen sich das Sandwich-Paneel zusammensetzt, zu ermöglichen, sich bei einer thermischen Schwankung zu verformen, und mindestens eine Trennwand (161) der mindestens einen Wabe (18, 180, 181), 182, 183) mindestens einen welligen Bereich (24) aufweist.

2. Sandwich-Paneel nach einem der vorhergehenden Ansprüche, wobei die innere Haut (12, 120, 121, 122, 123) der mindestens einen Wabe (18, 180, 182, 183) eine unterbrochene (202, 222) und/oder gekrümmte (20, 201, 22, 221) Linie an seinem Schnittpunkt mit mindestens einer Ebene (PI, P2) quer zur äußeren Haut (14, 141) aufweist.

3. Sandwich-Paneel nach einem der vorhergehenden Ansprüche, wobei die innere Haut (12, 120, 121, 122, 123) der mindestens einen Wabe (18, 180, 181, 182, 183) eine unterbrochene (202, 222) und/oder gekrümmte (20, 201, 22, 221) Linie an seinem Schnittpunkt mit mindestens zwei Ebenen (P1, P2) quer zur Außenhaut aufweist, wobei die Ebenen (PI, P2) schneidend und vorzugsweise senkrecht sind.

4. Sandwich-Paneel nach einem der vorhergehenden Ansprüche, wobei die innere Haut (12, 120, 121, 122, 123) der mindestens einen Wabe (18, 180, 181, 182, 183) eine unterbrochene (202, 222) und/oder gekrümmte (20, 201, 22, 221) Linie an seinem Schnittpunkt mit jeder Ebene quer zur äußeren Haut aufweist.

5. Sandwich-Paneel nach einem der vorhergehenden Ansprüche, wobei alle Trennwände (161) der mindestens einen Wabe mindestens einen welligen Bereich (24) aufweisen.

6. Sandwich-Paneel nach dem vorhergehenden Anspruch, wobei der wellige Bereich (24) in Kontakt mit der inneren Haut (12, 120, 121, 122, 123) angeordnet ist.

7. Sandwich-Paneel nach einem der Ansprüche 5 bis 6, wobei der wellige Bereich (24) eine Welligkeit in vertikaler und/oder horizontaler Richtung aufweist.

8. Sandwich-Paneel nach einem der vorhergehenden Ansprüche, wobei die äußere Haut (141) perforiert ist und die innere Haut (12, 120, 121, 122, 123) ein akustischer Reflektor ist, sodass das Sandwich-Paneel eine akustische Dämpfungsfunktion aufweist.

9. Sandwich-Paneel nach einem der vorhergehenden Ansprüche, wobei die Bestandteile des Sandwich-Paneels (10) Metalle und/oder Verbundmaterialien wie CMO oder CMC sind.

10. Auswurfdüse (109) einer Gondel (100) eines Flugzeug-Turbinenluftstrahltriebwerks mit einem Sandwich-Paneel (10) nach einem der vorhergehenden Ansprüche.

## Claims

1. A sandwich panel (10) for a nacelle (100) of an aircraft turbojet engine, including:
- a so-called outer skin (14, 141), intended to be in contact with an air flow,
- a so-called inner skin (12, 120, 121, 122, 123), opposite to the outer skin (14, 141),
- an intermediate system (15) comprising partitions (16, 161) linking the inner (12, 120, 121, 122, 123) and outer (14, 141) skins, so as to form cells (18, 180, 181, 182, 183),
**characterized in that** the inner skin (12, 120, 121, 122, 123) of at least one cell (18, 180, 181, 182, 183) has at least one undulation intended to enable the constituent materials of the sandwich panel to be deformed in case of thermal variation, and at least one partition (161) of said at least one cell (18, 180, 181, 182, 183) has at least one wavy area (24).

2. The sandwich panel according to any one of the preceding claims, wherein the inner skin (12, 120, 121, 122, 123) of said at least one cell (18, 180, 182, 183) has a broken line (202, 222) and/or a curve (20, 201, 22, 221) at its intersection with at least one plane (P1, P2) transverse to the outer skin (14, 141).

3. The sandwich panel according to any one of the preceding claims, wherein the inner skin (12, 120, 121, 122, 123) of said at least one cell (18, 180, 181, 182, 183) has a broken line (202, 222) and/or a curve (20, 201, 22, 221) at its intersection with at least two planes (P1, P2) transverse to the outer skin, said planes (P1, P2) being secant and preferably perpendicular.

4. The sandwich panel according to any one of the preceding claims, wherein the inner skin (12, 120, 121, 122, 123) of said at least one cell (18, 180, 181, 182, 183) has a broken line (202, 222) and/or a curve (20, 201, 22, 221) at its intersection with any plane transverse to the outer skin.

5. The sandwich panel according to any one of the preceding claims, wherein all the partitions (161) of said at least one cell have at least one wavy area (24).

6. The sandwich panel according to the preceding claim, wherein the wavy area (24) is disposed in contact with the inner skin (12, 120, 121, 122, 123).

7. The sandwich panel according to any one of claims 5 to 6, wherein the wavy area (24) has an undulation according to a vertical and/or horizontal direction.

8. The sandwich panel according to any one of the preceding claims, wherein the outer skin (141) is perforated and the inner skin (12, 120, 121, 122, 123) is an acoustic reflector, so that the sandwich panel has an acoustic attenuation function.

9. The sandwich panel according to any one of the preceding claims, wherein the constituent materials of the sandwich panel (10) are metals and/or composite materials such as OMCs or CMCs.

10. An ejection nozzle (109) of a nacelle (100) of an aircraft turbojet engine including a sandwich panel (10) according to any one of the preceding claims.
